# EUROPEAN PATENT SPECIFICATION

(11) **EP 4 007 854 B1**
(45) Date of publication and mention of the grant of the patent: **06.09.2023**
(21) Application number: 20754627.6
(22) Date of filing: 22.07.2020
(51) Int. Cl.: F03D 80/50, F03D 80/80

(54) **MODULAR WORK PLATFORM AND SYSTEM HAVING A MODULAR WORK PLATFORM AND A FIXTURE FOR A TUNED MASS DAMPER IN A WIND TURBINE**
MODULARE ARBEITSPLATTFORM UND SYSTEM MIT EINER MODULAREN ARBEITSPLATTFORM UND EINER HALTERUNG FÜR EINEN ABGESTIMMTEN MASSENDÄMPFER IN EINER WINDTURBINE
PLATEFORME DE TRAVAIL MODULAIRE ET SYSTÈME DOTÉ D'UNE PLATEFORME DE TRAVAIL MODULAIRE ET D'UN ACCESSOIRE POUR AMORTISSEUR À MASSE ACCORDÉE DANS UNE ÉOLIENNE

(30) Priority: 11.09.2019 EP 19196601
(43) Date of publication of application: 08.06.2022
(73) Proprietor: Siemens Gamesa Renewable Energy A/S, 7330 Brande (DK)
(72) Inventor: PARK, Heungsu, 8632 Lemming (DK)
(74) Representative: SGRE-Association
(86) International application number: PCT/EP2020/070686
(87) International publication number: WO 2021/047809

(56) References cited:
- DE-A1-102010 060 639
- DE-A1-102011 100 912
- KR-A- 20150 111 575

## Description

The invention relates to a modular work platform comprising multiple modules for assembly about a tuned mass damper in a wind turbine. The invention further relates to a system comprising the modular work platform and a fixture for the tuned mass damper in the wind turbine.

Wind turbines may be provided with a tuned mass damper to reduce the amplitude of mechanical vibrations thereof. The tuned mass damper may be located within a nacelle and/or a tower of the wind turbine. Such a tuned mass damper typically comprises a pendulum rod. One end of the pendulum rod is attached pivotable within the wind turbine. A damper mass is attached to the other end of the pendulum rod.

After the wind turbine comprising the tuned mass damper is assembled at the location of its operation, the pendulum rod may be damaged in the course of the operation of the wind turbine due to an excess of load, for example. In this case, the damaged pendulum rod must be repaired or replaced by an undamaged replacement pendulum rod. However, it is very cumbersome to repair or replace the pendulum rod. In particular, the pendulum rod is typically installed at great heights within the wind turbine, which makes access to the damaged pendulum rod quite challenging. Further, to reduce downtime of the wind turbine and maintenance time, the pendulum rod is typically being replaced from inside of the wind turbine.

Due to safety restrictions or technical restrictions, it may not be possible to remove and replace the relatively large and heavy pendulum rod in one piece. Instead, the damaged pendulum rod needs to be cut into several pieces. These pieces of the damaged pendulum rod may then be removed, e.g. by means of a lift, crane or the like arranged within the wind turbine. Also, it may be necessary to deliver the replacement pendulum rod for replacement in several pieces and assemble it at the location of installment. To perform such a replacement, the tuned mass damper, in particular the damper mass, may be fixed by a fixture and access for workers may be provided, so that the workers may perform the repair operations or replacement operations such as cutting the damaged pendulum rod and assembling the pieces of the replacement pendulum rod.

It is an object of the invention to provide a safe and fast to install working environment installable at the location of the tuned mass damper within the wind turbine, so that operations for replacing a damaged pendulum rod may be performed in a safe and quick manner. Background art solutions showing work platforms are for instance KR 2015 0111575 A, DE 10 2010 060639 A1 and DE 10 2011 100912 A1.

This object is solved by the subject-matters of the claims.

In particular, the object is solved by a modular work platform according to claim 1 and a system according to claim 15. Further details of the invention unfold from the other claims as well as the description and the drawings. Thereby, the features and details described in connection with the modular work platform of the invention apply in connection with the system of the invention, so that regarding the disclosure of the individual aspects of the invention it is or can be referred to one another.

According to a first aspect of the invention, the object is solved by a modular work platform comprising multiple modules for assembly about a tuned mass damper in a wind turbine, whereby the multiple modules are
(a) a first base platform having a first accessible area for providing working space to a first worker, the first base platform having at least one first connection means,
(b) a second base platform having a second accessible area for providing working space to a second worker, the second base platform having at least one third connection means,
(c) a first base connecting railing for connecting the first base platform with the second base platform, the first base connecting railing having two fifth connection means, wherein one of the two fifth connection means is configured to be connected to the at least one first connection means and another one of the two fifth connection means is configured to be connected to the at least one third connection means, and
(d) a second base connecting railing for connecting the first base platform with the second base platform, the second base connecting railing having two eighth connection means, wherein one of the two eighth connection means is configured to be connected to the at least one first connection means and another one of the two eighth connection means is configured to be connected to the at least one third connection means,
whereby in an assembled state of the modular work platform, in which the fifth connection means and eighth connection means are respectively connected to the first connection means and the third connection means, the modular work platform comprises a platform opening for the tuned mass damper, wherein the platform opening is formed between the first base platform, the second base platform, the first base connecting railing and the second base connecting railing.

Due to its modularity, the modular work platform comprises comparatively lightweight modules. The modules may easily be transported, in particular lifted, to the location of the tuned mass damper. Further, the modular work platform may be assembled and disassembled easily and quickly. Moreover, a safe yet easy and fast to install working environment at the location of the tuned mass damper may be provided by means of the modular work platform of the invention.

The numerical designation of modules or parts thereof, such as the connection means (e.g. "first" connection means and "second" connection means) or cross members, has the sole purpose of distinguishing the entirety of modules or parts thereof, such as the connection means and cross members, from one another. In this sense, the specific numerical designation is not intended to limit any of the claims. This means, for example, that a claim including connection means of non-consecutive numerical designations does not include the unmentioned connection means of numerical designations falling in between the non-consecutive numerical designations of the included connection means.

Preferably, the at least one first connection means are two first connection means and the at least one third connection means are two third connection means, wherein one of the fifth connection means is configured to be connected to one of the two first connection means and the other one of the fifth connection means is configured to be connected to one of the two third connection means, and wherein one of the eighth connection means is configured to be connected to the other one of the two first connection means and the other one of the eighth connection means is configured to be connected to the other one of the two third connection means. Thereby, the stability of the modular work platform is enhanced.

Further preferably, the first base platform and the second base platform are located opposite of one another in the assembled state. In particular, the first base platform and the second base platform may be facing each other and/or be arranged parallel to each other. Thereby, the first accessible area and the second accessible area are separated in a way in that the workers can work independently from one another.

It is preferred, that the modular work platform comprises as further ones of the multiple modules
(a) a first base railing having at least one eleventh connection means configured to be connected to at least one second connection means of the first base platform, and
(b) a second base railing having at least one fourteenth connection means configured to be connected to at least one fourth connection means of the second base platform.

In the assemble state of the modular working platform, the at least one eleventh connection means is connected to the at least one second connection means, and the at least one fourteenth connection means is configured connected to the at least one fourth connection means. The first base railing and the second base railing thereby provide support to the workers while cutting or assembling the pendulum rod and ensure that the workers cannot fall off backwards from the first base platform and the second base platform, whereby possible injuries are prevented.

The eleventh connection means may be two eleventh connection means and the second connection means may be two second connection means, wherein one of the two eleventh connection means is configured to be connected to one of the two second connection means and another one of the two eleventh connection means is configured to be connected to another one of the two second connection means. The fourteenth connection means may be two fourteenth connection means and the fourth connection means may be two fourth connection means, wherein one of the two fourteenth connection means is configured to be connected to one of the two fourth connection means and another one of the two fourteenth connection means is configured to be connected to another one of the two fourth connection means. Thereby, the stability of the modular work platform is enhanced.

It is further preferred, that the modular work platform comprises as further ones of the multiple modules
(a) a first railing connecting railing having two seventeenth connection means, wherein one of the two seventeenth connection means is configured to be connected to a twelfth connection means of the first base railing and the other one of the two seventeenth connection means is configured to be connected to one of two ninth connection means of the second base connecting railing, and
(b) a second railing connecting railing having two nineteenth connection means, wherein one of the two nineteenth connection means is configured to be connected to a fifteenth connection means of the second base railing and the other one of the two nineteenth connection means is configured to be connected to the other one of the two ninth connection means of the second base connecting railing, whereby in the assembled state of the modular work platform, the first railing connecting railing connects the first base railing with the second base connecting railing and the second railing connecting railing connects the second base railing with the second base connecting railing.

In the assembled state of the modular work platform, one of the two seventeenth connection means is connected to the twelfth connection means of the first base railing and the other one of the two seventeenth connection means is connected to one of the two ninth connection means of the second base connecting railing, and one of the two nineteenth connection means is connected to the fifteenth connection means of the second base railing and the other one of the two nineteenth connection means is connected to the other one of the two ninth connection means of the second base connecting railing. The first railing connecting railing and the second railing connecting railing thereby provide support to the workers while cutting or assembling the pendulum rod and ensure that the workers cannot fall off sideward from the first base platform and the second base platform, whereby possible injuries are prevented.

Moreover, it is preferred, that the modular work platform comprises as further ones of the multiple modules
(a) a fifth cross member having two eighteenth connection means, wherein one of the two eighteenth connection means is configured to be connected to a thirteenth connection means of the first base railing and the other one of the two eighteenth connection means is configured to be connected to one of two tenth connection means of the second base connecting railing, and
(b) a sixth cross member having two twentieth connection means, wherein one of the two twentieth connection means is configured to be connected to a sixteenth connection means of the second base railing and the other one of the two twentieth connection means is configured to be connected to the other one of the two tenth connection means of the second base connecting railing,
whereby in the assembled state of the modular work platform, the fifth cross member connects the first base railing with the second base connecting railing and the sixth cross member connects the second base railing with the second base connecting railing.

In the assembled state of the modular work platform, one of the two eighteenth connection means is connected to the thirteenth connection means of the first base railing and the other one of the two eighteenth connection means is connected to one of the two tenth connection means of the second base connecting railing, and one of the two twentieth connection means is connected to the sixteenth connection means of the second base railing and the other one of the two twentieth connection means is connected to the other one of the two tenth connection means of the second base connecting railing. The fifth cross member and the sixth cross member thereby provide further support to the workers while cutting or assembling the pendulum rod and ensure that the workers cannot fall off sideward from the first base platform and the second base platform, whereby possible injuries are prevented.

Also, it is preferred, that the modular work platform comprises as further ones of the multiple modules
(a) a first swivel door having a twenty-first connection means configured to be swivel connected to a first one of a sixth connection means of the first base connecting railing or the first base railing, and/or
(b) a second swivel door having a twenty-third connection means configured to be swivel connected to a second one of a sixth connection means of the first base connecting railing or the second base railing.

In the assembled state of the modular work platform, the twenty-first connection means is swivel connected to the first one of the sixth connection means of the first base connecting railing or the first base railing, and/or the twenty-third connection means is swivel connected to the second one of the sixth connection means of the first base connecting railing or the second base railing. Thereby, the first swivel door and the sixth swivel door provide easy entry and exit from the modular work platform. At the same time, they provide support to the workers while cutting or assembling the pendulum rod and ensure that the workers cannot fall off sideward from the first base platform and the second base platform, whereby possible injuries are prevented.

The first swivel door and the second swivel door may further comprise locking element for locking with the modular work platform, in particular the first base connecting railing or the first base railing and the second base railing. The first swivel door and the second swivel door may have a U-shaped design. The first swivel door and the second swivel door may have a circular cross section, which allows for easy grabbing of the swivel doors. The first swivel door and the second swivel door may be hollow structures, which allows for a lightweight design.

The first swivel door may have a twenty-second connection means configured to be swivel connected to a first one of a seventh connection means of the first base connecting railing. The second swivel door may have a twenty-fourth connection means configured to be swivel connected to a second one of a seventh connection means of the first base connecting railing. In the assembled state of the modular work platform, the twenty-second connection means is swivel connected to the first one of the seventh connection means of the first base connecting railing and the twenty-fourth connection means is swivel connected to the second one of the seventh connection means of the first base connecting railing. Thereby, the first swivel door and the second swivel door are provided with a two-point suspension improving the stability and swivel capabilities of the swivel doors. The twenty-first connection means, the twenty-second connection means, the twenty-third connection means and/or the twenty-fourth connection means may be the same connection means. In particular, the twenty-first connection means, the twenty-second connection means, the twenty-third connection means and/or the twenty-fourth connection means may be rods protruding from ends of the swivel doors. The rods may in particular be protruding perpendicular or substantially perpendicular from the swivel doors. These rods may be integrally formed with the swivel doors. Each of the rods may have a through hole for a pin, whereby the through hole may be arranged transversely, in particular perpendicular, to the longitudinal extension of the rod.

Preferably, each of the first base connecting railing and the second base connecting railing is provided with two railing posts and a handrail. Moreover, the first base railing and the second base railing may be provided with two railing posts and a handrail. The handrail may be positioned on top of the two railing posts.

Further preferably, the handrails are formed integrally with their respective railing posts. The handrails and railing posts may have a substantially rectangular cross section, which allows for a particularly stable design. Also, the handrails and railing posts may be hollow structures, which allows for a lightweight design.

Moreover preferably, each of the first base connecting railing and the second base connecting railing comprise a cross member, which is arranged beneath the handrails and in between the two railing posts. Further, the first base railing and the second base railing may also comprise a cross member.

It is preferred, that respective ends of the railing posts of the first base connecting railing and the second base connecting railing serve as the fifth connection means and the eighth connection means, whereby each of the respective ends of the railing posts comprises a through hole for a pin. The through hole may be arranged transversely, in particular perpendicular, to the longitudinal extension of the railing posts. Further, respective ends of the railing posts of the first base railing and the second base railing may serve as the eleventh connection means and the fourteenth connection means, whereby each of the respective ends of the railing posts may comprise a through hole for a pin. Thereby, particularly easy and fast assembly is facilitated and the cost of manufacturing the modules is kept at a minimum.

It is further preferred, that the first connection means and the third connection means are sleeves configured in size and/or shape corresponding to the ends of the railing posts of the first base connecting railing and the second base connecting railing, whereby in particular each of the sleeves comprises a through hole for the pin. That the sleeves are configured in size and/or shape corresponding to the ends of the railing posts may in particular mean, that the railing posts have a size which may fit into the sleeves and/or that the railing posts have a shape, for example similar shape, corresponding to the shape of the sleeves so that they may fit into the sleeves. In particular, it may mean, that the railing posts may be provided contacting the sleeve and moreover to at least some degree of form fitting in the sleeves. The through hole may be arranged transversely, in particular perpendicular, to the longitudinal extension of the sleeve. Moreover, the second connection means, the fourth connection means, the sixth connection means, the seventh connection means, the ninth connection means, the tenth connection means, the fifteenth connection means and/or the sixteenth connection means may be sleeves, in particular configured in size and/or shape corresponding to ends of railing posts and/or the corresponding connection means, whereby in particular each of the sleeves comprises a through hole for the pin. The sleeves may have a bottom plate attached thereto for limiting insertion of a railing post or connection mean therein. The through holes of the sleeves are in particular designed at a height of the through holes of the railing posts or connection means upon insertion, thereby providing the possibility for locking the sleeves with the railing posts or connection means by means of locking elements.

It is moreover preferred, that the ends of the railing posts of the first base connecting railing and the second base connecting railing are received by the first connection means and the third connection means in the assembled state of the modular work platform, whereby the railing posts and the sleeves are locked by means of locking elements, in particular a double wire lock pins. Thereby, particularly easy and fast assembly of the modular work platform is enabled. The double wire lock pin does not require tools for fastening, is easy to fasten and to release, thereby improving the assembly of the modular work platform even further. Further, respective ends of the railing posts of the first base railing and the second base railing may be received by the second connection means and the fourth connection means in the assembled state of the modular work platform, whereby the railing posts and the sleeves are locked by means of locking elements, in particular double wire lock pins.

Also, it is preferred, that the first base connecting railing and the second base connecting railing are curved. In particular, they may be curved in a direction away from the platform opening. Further, they may be curved so that they extend beyond a width of the first base platform and the second base platform. In particular, the first base base connecting railing and the second base connecting railing may be curved so as to conform to a shape of the tuned mass damper, in particular the damper mass, or a fixture, in particular clamping arms of a fixture, on which the modular work platform is arranged. Thereby, the first base module and second base module can be kept relatively small and lightweight in design and still be connected by means of the curved first base connecting railing and the second base connecting railing. In particular, handrails, crossbars and/or walls of the first base connecting railing and the second base connecting railing may be curved.

Moreover, it is preferred, a first wall is attached to the first base module, a second wall is attached to the second base module, a third wall is attached to the first base connecting railing and a fourth wall is attached to the second base connecting railing, so that the first wall, the second wall, the third wall and the fourth wall together enclose the first accessible area, the second accessible area and the platform opening. In particular, the walls extend in a direction from the accessible areas along a height of the base connecting railings. In particular, the walls of the first base module and the second base module may be arranged at least partially enclosing the first accessible area and the second accessible area. Moreover, in particular, the walls of the first base connecting railing and the second base connecting railing may be arranged at ends of the railing posts thereof. This provides secure step for the workers without risk of falling from the base platforms.

Moreover, the risk of tools or parts falling down from the modular work platform is reduced. Preferably, the walls have a relatively small height, for example 2 % to 30 %, in particular 5 % to 20% of a height of the first base connecting railing. Thereby, the modules can still be designed with lightweight despite having the walls. In particular, the walls of the first base connecting railing and the second base connecting railing may be higher than the walls of the first base module and the second base module. This is preferable due to the first base connecting railing and the second base connecting railing surrounding the immediate working zone, which has a higher risk of a tool or part to be dropped.

The first base platform and the second base platform may be designed alike. Further, the first base connecting railing and the second base connecting railing may be designed alike. Moreover, the first base railing and the second base railing may be designed alike. Also, the first railing connecting railing and the second railing connecting railing may be designed alike. Also, the first swivel door and the second swivel door may be designed alike. Alike modules at least have an equal design, in particular with regards to their shape or to the number, type and/or arrangement of connection means. Further, alike modules may have equal size and/or material. In particular, alike modules may have equal structure. Thereby, the modularity of the modular work platform is enhanced and the modular work platform may be assembled fast and easy without having to distinguish alike modules.

The first connection means, the second connection means, the third connection means and the fourth connection means may be the same connection means. Thereby, the assembly of the modules may be enhanced because the workers do not have to distinguish between the first and second base modules and/or the first and second base connecting railings. Further, the sixth connection means, the seventh connection means, the ninth connection means, the tenth connection means, the twelfth connection means, the thirteenth connection means, the fifteenth connection means and/or the sixteenth connection means may be the same connection means as the first connection means, the second connection means, the third connection means and the fourth connection means.

The modules may be entirely formed from one material. Also, the modules may be entirely formed from the same material. The material may be a lightweight metal, such as aluminum, for example.

According to a second aspect of the invention, the object is solved by a system comprising the modular work platform of the invention and a fixture for the tuned mass damper in the wind turbine, whereby the modular work platform is connected to the fixture. The system may further comprise the tuned mass damper, in particular a pendulum rod and a damper mass. Further, the system may comprise the wind turbine. The pendulum rod may be attached to the wind turbine. The damper mass may be supported by the fixture. In particular, the fixture may have a support structure supporting the damper mass. The support structure may at least partially enclose the damper mass. The fixture may further have two clamping arms. The clamping arms may be arranged to clamp the damper mass in between. Therefore, the clamping arms may comprise an opening in between the clamping arms, when the clamping arms are being brought together. However, the clamping arms may also be arranged not to clamp the damper mass but to only surround it. In any case, the support structure of the fixture may be arranged at the clamping arms and thereby support the damper mass. The first base module and the second base module may be attached by means of force locking and/or form locking to the fixture, in particular to the clamping arms.

Further advantages, features and details of the invention unfold from the following description, in which by reference to drawings FIG. 1 to 9 embodiments of the present invention are described in detail. In the drawings, there is schematically shown:
FIG. 1 a perspective view of a system according to an embodiment of the invention having a modular work platform and a fixture,
FIG. 2 a perspective view of a modular work platform as shown in FIG. 1,
FIG. 3 a first step of assembling the modular work platform of FIG. 2 on the fixture,
FIG. 4 a second step of assembling the modular work platform of FIG. 2 on the fixture,
FIG. 5 a view on a detail from FIG. 4,
FIG. 6 a third step of assembling the modular work platform of FIG. 2 on the fixture,
FIG. 7 a fourth step of assembling the modular work platform of FIG. 2 on the fixture,
FIG. 8 a fifth step of assembling the modular work platform of FIG. 2 on the fixture, and
FIG. 9 a view on a detail from FIG. 8.

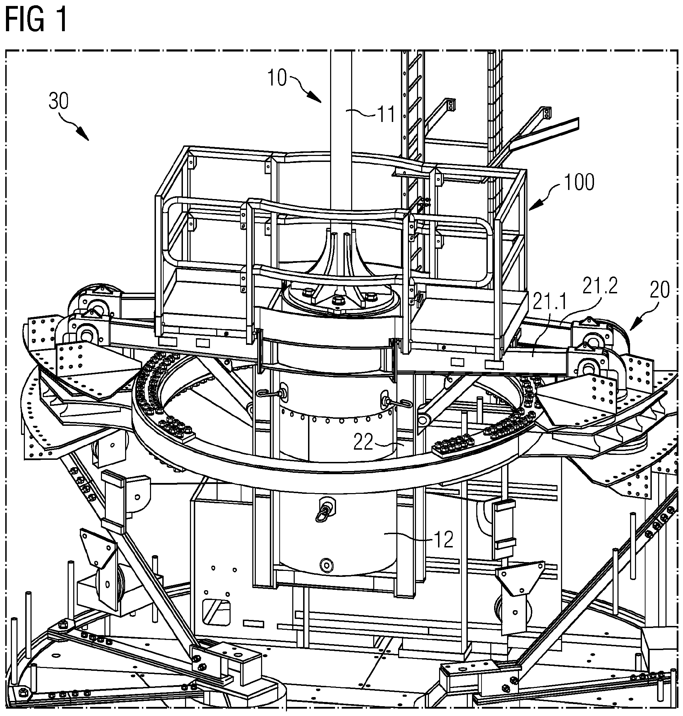

Same objects in FIG. 1 to 9 are denominated with the same reference number.

FIGURE 1 shows a perspective view of a system 30 according to an embodiment of the invention having a modular work platform 100 according to an embodiment of the invention and a fixture 20. The modular work platform 100 is mounted on the fixture 20, in particular on two clamping arms 21.1, 21.2 of the fixture 20. The clamping arms 21.1, 21.2 clamp the damper mass 12 of a tuned mass damper 10. Further, a support structure 22 is attached to the clamping arms 21.1, 21.2 supporting and partially enclosing the damper mass 12. The damper mass 12 is attached by means of a pendulum rod 11 of the tuned mass damper 10 within a wind turbine, which is not shown here.

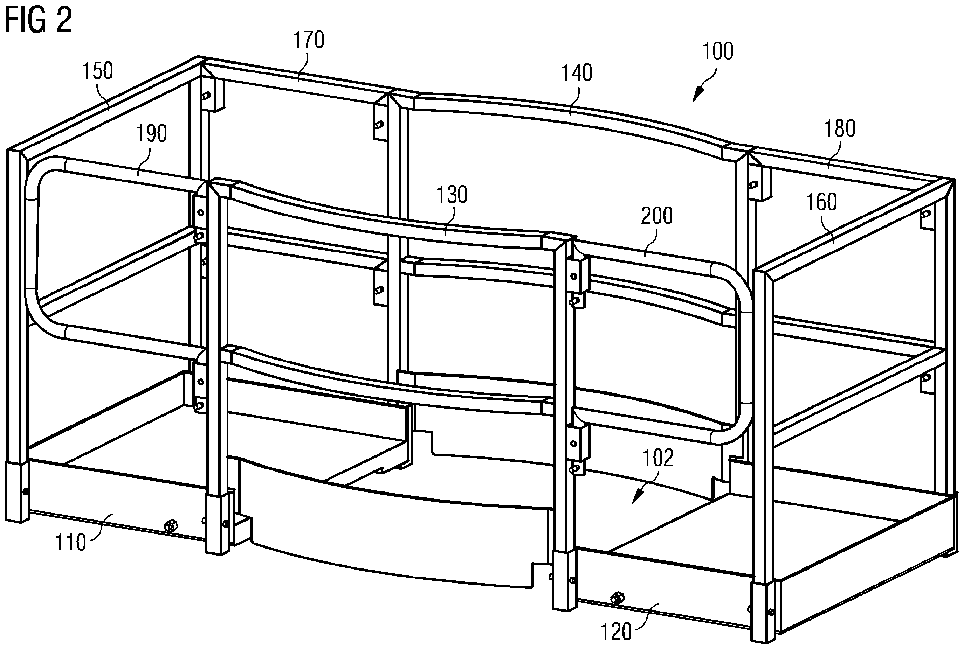

FIGURE 2 shows a perspective view of the modular work platform 100 of FIG. 1. The modular work platform 100 comprises a first base platform 110, a second base platform 120, a first base connecting railing 130, a second base connecting railing 140, a first base railing 150, a second base railing 160, a first railing connecting railing 170, a second railing connecting railing 180, a first swivel door 190 and a second swivel door 200 as separate modules, which are shown in the assembled state, in which the modular work platform 100 is formed. The modular work platform 100 comprises a platform opening 102 for the tuned mass damper 10, as being shown in FIG. 1.

In the following, an exemplary assembly process of the modular work platform 100 and details thereof will be described in detail.

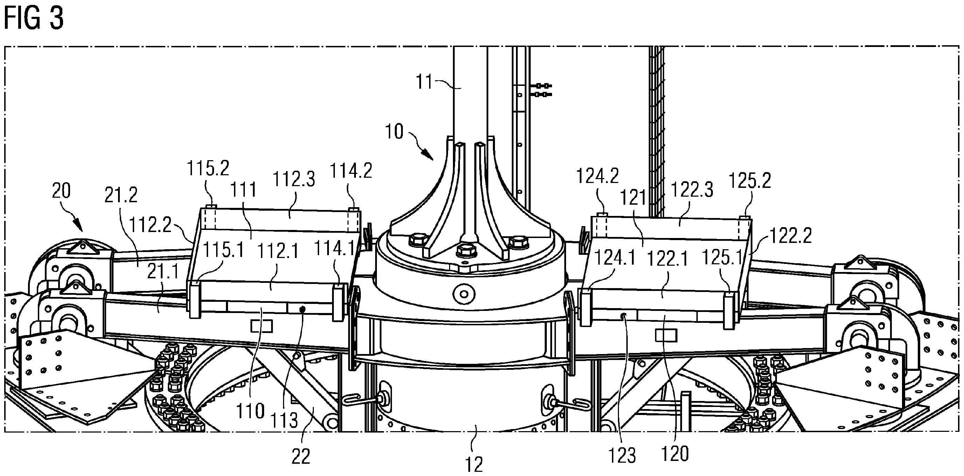

FIGURE 3 shows a first step of assembling the modular work platform 100 of FIG. 2 on the fixture 20. In this first step, the first base module 110 and the second base module 120 are attached to the clamping arms 21.1, 21.2. Each of the first base module 110 and the second base module 120 is placed on top of both clamping arms 21.1, 21.2 by means of form fitting. For this purpose, a frame structure of the first base module 110 and second base module 120 corresponds in form to the clamping arms 21.1, 21.2 for achieving the form fit. The frame structure may comprise a grating. This grating may be arranged on top of the clamping arms 21.1, 21.2 and provide high stability and lightweight design of the base modules 110, 120.

The first base module 110 and the second base module 120 are arranged opposed of one another and with the pendulum rod 11 and the damped mass 12 in between. The first base module 110 and the second base module 120 respectively comprise a first accessible area 111 and a second accessible area 121, each providing working space to a worker. The mentioned grating may support these accessible areas 111, 121. The first base module 110 and the second base module 120 further respectively comprise a first wall 112 and a second wall 122, the first wall 112 being designed with three separate wall sections 112.1, 112.2, 112.3 enclosing three sides of the first accessible area 111 and the second wall 122 being designed with three separate wall sections 122.1, 122.2, 122.3 enclosing three sides of the second accessible area 121. The first base module 110 and the second base module 120 respectively comprise at least one first eyelet 113 and at least one second eyelet 114 for allowing easy lifting of the first base module 110 and the second base module 120 to the fixture 20.

The first base module 110 further comprises two first connection means 114.1, 114.2 located opposite of one another and being separated by the first accessible area 111. The two first connection means 114.1, 114.2 are located next to a side of the first base module 110 not being surrounded by the first wall 112. The two first connection means 114.1, 114.2 are arranged on an outer side of the first wall 112 facing away from the first accessible area 111. In particular, the first connection means 114.1 is arranged at the first wall section 112.1 and the first connection means 114.2 is arranged at the first wall section 112.3. Moreover, two second connection means 115.1, 115.2 are arranged opposite of one another being separated by the first accessible area 111 and located next to the first wall section 112.2. The two second connection means 115.1, 115.2 are also arranged on the outer side of the first wall 112.

The second base module 120 is designed alike the first base module 110. That is, the second base module 120 comprises two third connection means 124.1, 124.2 located opposite of one another and being separated by the second accessible area 121. The two third connection means 124.1, 124.2 are located next to a side of the second base module 120 not being surrounded by the second wall 122. The two third connection means 124.1, 124.2 are arranged on an outer side of the second wall 122 facing away from the second accessible area 121. In particular, the third connection means 124.1 is arranged at the second wall section 122.1 and the third connection means 124.2 is arranged at the second wall section 112.3. Moreover, two fourth connection means 125.1, 125.2 are arranged opposite of one another being separated by the second accessible area 121 and located next to the second wall section 122.2. The two fourth connection means 125.1, 125.2 are also arranged on the outer side of the second wall 122.

The first connection means 114.1, 114.2, the second connection means 115.1, 115.2, the third connection means 124.1, 124.2 and the fourth connection means 125.1, 125.2 are designed as sleeves with through holes.

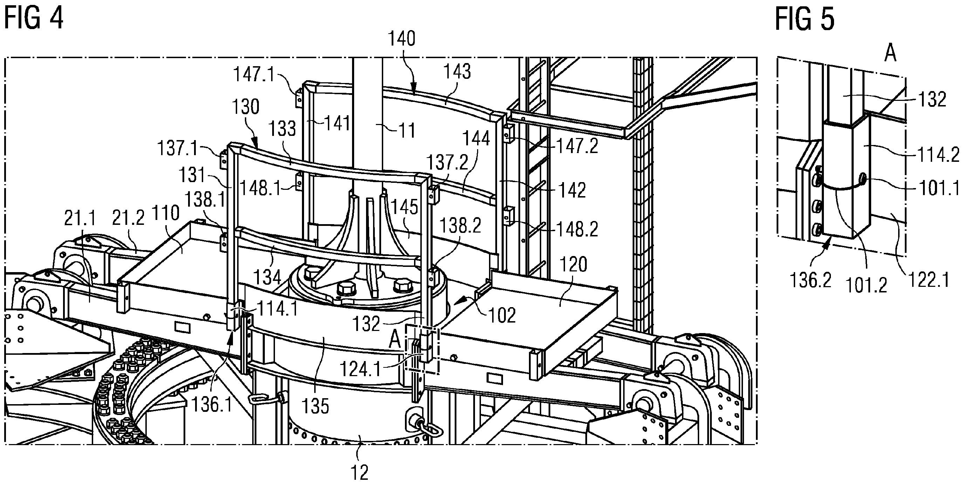

FIGURE 4 shows a second step of assembling the modular work platform 100 of FIG. 2 on the fixture 20. In this second step, the first base connecting railing 130 and the second base connecting railing 140 are assembled with the first base module 110 and the second base module 120. For this purpose, the first base connecting railing 130 comprises fifth connection means 136.1, 136.2 and the second base connecting railing 130 comprises eighth connection means 146.

The first base connecting railing 130 comprises a first railing post 131, a second railing post 132 and a first handrail 133 attached thereto. Here, an end of the first railing post 131 serves as the fifth connection means 136.1 and an end of the second railing post 132 serves as the fifth connection means 136.2. By means of inserting the ends of the fifth connection means 136.1, 136.2 into the corresponding first connection means 114.1 and the third connection means 124.1, the first base connecting railing 130 is connecting the first base module 110 with the second base module 120.

Moreover, the first base connecting railing 130 comprises a first cross member 134 attached underneath the first handrail 133 and in between the first railing post 131 and the second railing post 132 as well as a third wall 135 underneath the first cross member 134. The first handrail 133, the first cross member 134 and the third wall 135 are curved in the direction away from the platform opening 102.

The second base connecting railing 140 is designed alike the first base connecting railing 130. That is, the second base connecting railing 140 comprises a third railing post 141, a fourth railing post 142 and a second handrail 143 attached thereto. Here, an end of the second railing post 141 serves as the eighth connection means 146.1 and an end of the fourth railing post 142 serves as the eighth connection means 146.2. By means of inserting the ends of the eighth connection means 146.1, 146.2 into the corresponding second connection means 114.2 and the third connection means 124.2, which cannot be seen in this illustration, the second base connecting railing 140 is connecting the first base module 110 with the second base module 120. Moreover, the second base connecting railing 140 comprises a second cross member 144 attached underneath the second handrail 143 and in between the third railing post 141 and the fourth railing post 142 as well as a fourth wall 145 underneath the second cross member 144. The second handrail 143, the second cross member 144 and the fourth wall 145 are curved in the direction away from the platform opening 102.

Further, the first base connecting railing 130 comprises sixth connection means 137.1, 137.2 and seventh connection means 138.1, 138.2 and the second base connecting railing 140 comprises eighth connection means 147.1, 147.2 and ninth connection means 148.1, 148.2, whose functions will be described later. The sixth connection means 137.1, 137.2, the seventh connection means 138.1, 138.2, the eighth connection means 147.1, 147.2 and the ninth connection means 148.1, 148.2 are also designed as sleeves comprising through holes.

FIGURE 5 shows a view on a detail A from FIG. 4. The detail shows the connection of the fifth connection means 136.1 with the first connection means 114.2. This detail is representative for all of the connected connection means of the modular work platform 100 from FIG. 4 in the sense that the respective connected connection means are connected by means of a locking element 101. In this case, the locking element 101 is a double wire lock pin comprising a pin 101.1 and a double wire 101.2.

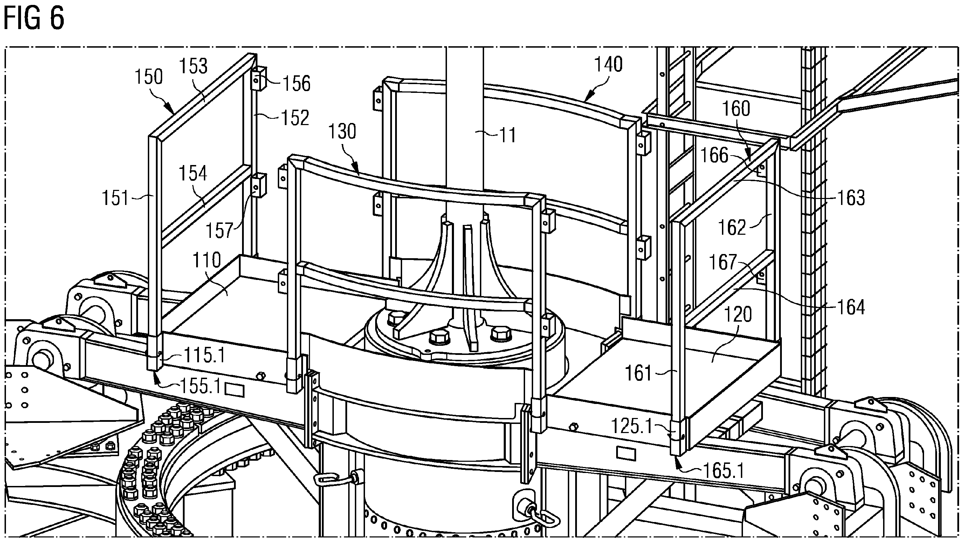

FIGURE 6 shows a third step of assembling the modular work platform 100 of FIG. 2 on the fixture 20. In this third step, the first base railing 150 and the second base railing 160 are assembled with the first base module 110 and the second base module 120.

Both, the first base railing 150 and the second base railing 160 comprise respective fifth, sixth, seventh and eighth railing posts 151, 152, 161, 162 and thereto attached third and fourth handrails 153, 163 and third and fourth cross members 154, 164. Respective eleventh and fourteenth connection means 155.1, 155.2, 165.1, 165.2 of the first base railing 150 and the second base railing 160 are inserted into the second connection means 115.1, 115.2 of the first base platform 110 and the fourth connection means 125.1, 125.2 of the second base platform 120 and are locked by means of double wire lock pins.

The first base railing 150 and the second base railing 160 further comprise alike twelfth, thirteenth, fifteenth and sixteenth connection means 156, 157, 166, 167, respectively, which are designed as sleeves with through holes and are alike the sixth connection means 137.1, 137.2, the seventh connection means 138.1, 138.2, the eighth connection means 147.1, 147.2 and the ninth connection means 148.1, 148.2 of the first base connecting railing 130 and the second base connecting railing 140. Their functions will be described later.

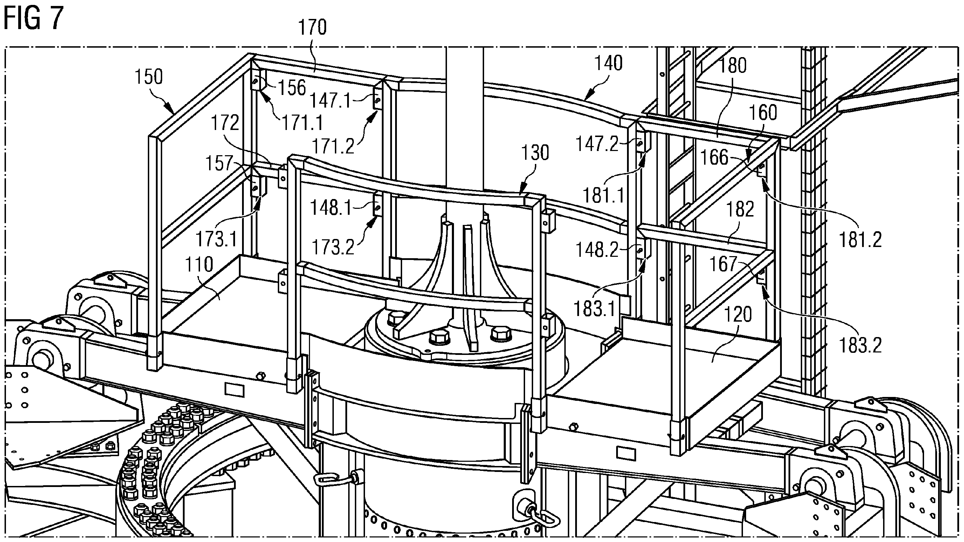

FIGURE 7 shows a fourth step of assembling the modular work platform 100 of FIG. 2 on the fixture 20. In the fourth step, the first railing connecting railing 170 with its seventeenth connection means 171.1, 171.2, the second railing connecting railing 180 with its nineteenth connection means 181.1, 181.2, the fifth cross member 172 with its eighteenth connection means 172.1, 172.2 and the sixth cross member 182 with its twentieth connection means 183.1, 183.2 are respectively connected with the twelfth, thirteenth, fifteenth and sixteenth connection means 156, 157, 166, 167 of the first base railing 150 and the second base railing 160 and with the eighth connection means 147.1, 147.2 and the ninth connection means 148.1, 148.2 of the second base connecting railing 140 and locked by means of double wire lock pins. The seventeenth, eighteenth, nineteenth and twentieth connection means 171.1, 171.2, 172.1, 172.2, 181.1, 181.2, 183.1, 183.2 of the respective first railing connecting railing 170, second railing connecting railing 180, fifth cross member 172 and sixth cross member 182 are protruding portions thereof. Generally, the first railing connecting railing 170, second railing connecting railing 180, fifth cross member 172 and sixth cross member 182 have the shape of a square bracket. In that square bracket, the ends of the bracket giving the bracket its square shape and protruding perpendicular from the straight portion of the square bracket are the respective connection means.

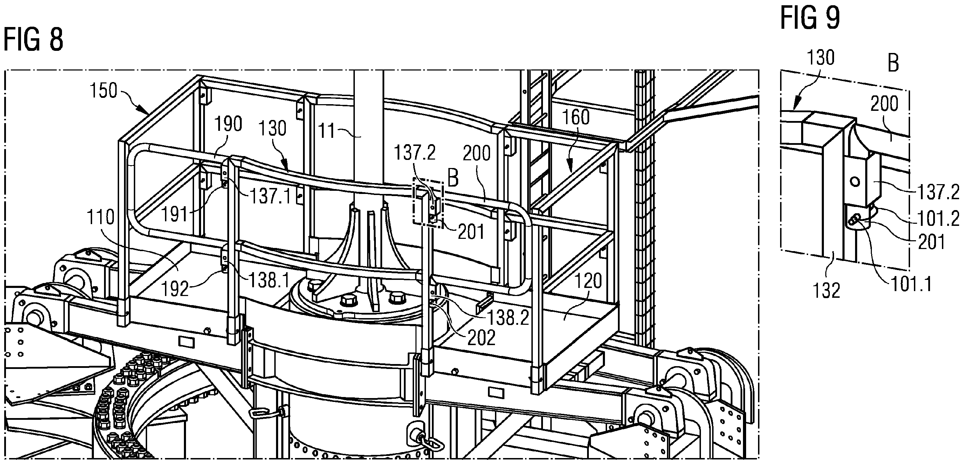

FIGURE 8 shows a fifth step of assembling the modular work platform 100 of FIG. 2 on the fixture 20. In the fifth step, the first swivel door 190 is attached with its twenty-first connection means 191 to the sixth connection means 137.1 and with its twenty-second connection means 192 to the seventh connection means 138.1. Further, the second swivel door 200 is attached with its twenty-third connection means 201 to the sixth connection means 137.2 and with its twenty-fourth connection means 202 to the seventh connection means 138.2. The first swivel door 190 and the second swivel door 200 are generally U-shaped and have a circular cross-section. Their connection means 191, 192, 201, 202 are protruding portions of the swivel doors 190, 200. In particular, each of the respective connection means 191, 192, 201, 202 of a swivel door 190, 200 protrudes, in particular in a direction perpendicular thereto, from one open end of the U-shaped swivel doors 190, 200.

FIGURE 9 shows a view on a detail B from FIG. 8. The detail shows the connection of the sixth connection means 137.2 with the twenty-third connection means 201. This detail is representative for all of the connected connection means of the first swivel door 190 and the second swivel door 200 from FIG. 8 in the sense that the respective connected connection means are connected by means of a locking element 101. In this case, the locking element 101 is a double wire lock pin comprising a pin 101.1 and a double wire 101.2. The pin 101.1 has a head for restricting the pin 101.1 from unintentional loosening. It may be preferable to insert the pin 101.1 with its head facing away from the modular work platform 100. Thereby, the opening angle of the swivel doors 190, 200 towards the accessible areas 111, 121 may be increased to ensure safe entry for the workers, whereas the opening angle of the swivel doors 190, 200 in the direction facing away from the modular work platform 100 may be decreased.

## Claims

1. Modular work platform (100) comprising multiple modules (110, 120, 130, 140, 150, 160, 170, 180, 190, 200) for assembly about a tuned mass damper (10) in a wind turbine, whereby the multiple modules (110, 120, 130, 140, 150, 160, 170, 180, 190, 200) are
(a) a first base platform (110) having a first accessible area (111) for providing working space to a first worker, the first base platform (110) having at least one first connection means (114.1, 114.2),
(b) a second base platform (120) having a second accessible area (121) for providing working space to a second worker, the second base platform (120) having at least one third connection means (124.1, 124.2),
(c) a first base connecting railing (130) for connecting the first base platform (110) with the second base platform (120), the first base connecting railing (130) having two fifth connection means (136.1, 136.2), wherein one of the two fifth connection means (136.1) is configured to be connected to the at least one first connection means (114.1) and another one of the two fifth connection means (136.2) is configured to be connected to the at least one third connection means (124.1), and
(d) a second base connecting railing (140) for connecting the first base platform (110) with the second base platform (120), the second base connecting railing (140) having two eighth connection means (146.1, 146.2), wherein one of the two eighth connection means (146.1) is configured to be connected to the at least one first connection means (114.2) and another one of the two eighth connection means (146.2) is configured to be connected to the at least one third connection means (124.2),
whereby in an assembled state of the modular work platform (100), in which the fifth connection means (136.1, 136.2) and eighth connection means (146.1, 146.2) are respectively connected to the first connection means (114.1, 114.2) and the third connection means (124.1, 124.2), the modular work platform (100) comprises a platform opening (102) for the tuned mass damper (10), wherein the platform opening (102) is formed between the first base platform (110), the second base platform (120), the first base connecting railing (130) and the second base connecting railing (140).

2. Modular work platform (100) according to claim 1, wherein the at least one first connection means (114.1, 114.2) are two first connection means (114.1, 114.2) and the at least one third connection means (124.1, 124.2) are two third connection means (124.1, 124.2), wherein one of the fifth connection means (136.1) is configured to be connected to one of the two first connection means (114.1) and the other one of the fifth connection means (136.2) is configured to be connected to one of the two third connection means (124.1), and wherein one of the eighth connection means (146.1) is configured to be connected to the other one of the two first connection means (114.2) and the other one of the eighth connection means (146.2) is configured to be connected to the other one of the two third connection means (124.2).

3. Modular work platform (100) according to claim 1 or 2, wherein the first base platform (110) and the second base platform (120) are located opposite of one another in the assembled state.

4. Modular work platform (100) according to any of the previous claims, wherein the modular work platform (100) comprises as further ones of the multiple modules (110, 120, 130, 140, 150, 160, 170, 180, 190, 200)
(a) a first base railing (150) having at least one eleventh connection means (155.1, 155.2) configured to be connected to at least one second connection means (115.1, 115.2) of the first base platform (110), and
(b) a second base railing (160) having at least one fourteenth connection means (165.1, 165.2) configured to be connected to at least one fourth connection means (125.1, 125.2) of the second base platform (120).

5. Modular work platform (100) according to claim 4, wherein the modular work platform (100) comprises as further ones of the multiple modules (110, 120, 130, 140, 150, 160, 170, 180, 190, 200)
(a) a first railing connecting railing (170) having two seventeenth connection means (171.1, 171.2), wherein one of the two seventeenth connection means (171.1) is configured to be connected to a twelfth connection means (156) of the first base railing (150) and the other one of the two seventeenth connection means (171.2) is configured to be connected to one of two ninth connection means (147.1) of the second base connecting railing (140), and
(b) a second railing connecting railing (180) having two nineteenth connection means (181.1, 181.2), wherein one of the two nineteenth connection means (181.1) is configured to be connected to a fifteenth connection means (166) of the second base railing (160) and the other one of the two nineteenth connection means (181.2) is configured to be connected to the other one of the two ninth connection means (147.2) of the second base connecting railing (140),
whereby in the assembled state of the modular work platform (100), the first railing connecting railing (170) connects the first base railing (150) with the second base connecting railing (140) and the second railing connecting railing (180) connects the second base railing (160) with the second base connecting railing (140).

6. Modular work platform (100) according to claim 4 or 5, wherein the modular work platform (100) comprises as further ones of the multiple modules (110, 120, 130, 140, 150, 160, 170, 180, 190, 200)
(c) a fifth cross member (172) having two eighteenth connection means (173.1, 173.2), wherein one of the two eighteenth connection means (173.1) is configured to be connected to a thirteenth connection means (157) of the first base railing (150) and the other one of the two eighteenth connection means (173.2) is configured to be connected to one of two tenth connection means (148.1) of the second base connecting railing (140), and
(d) a sixth cross member (182) having two twentieth connection means (183.1, 183.2), wherein one of the two twentieth connection means (183.1) is configured to be connected to a sixteenth connection means (167) of the second base railing (160) and the other one of the two twentieth connection means (183.2) is configured to be connected to the other one of the two tenth connection means (148.2) of the second base connecting railing (140),
whereby in the assembled state of the modular work platform (100), the fifth cross member (172) connects the first base railing (150) with the second base connecting railing (140) and the sixth cross member (182) connects the second base railing (160) with the second base connecting railing (140).

7. Modular work platform (100) according to any of the previous claims, wherein the modular work platform (100) comprises as further ones of the multiple modules (110, 120, 130, 140, 150, 160, 170, 180, 190, 200)
(c) a first swivel door (190) having a twenty-first connection means (191) configured to be swivel connected to a first one of a sixth connection means (137.1) of the first base connecting railing (130), and/or
(d) a second swivel door (200) having a twenty-third connection means (201) configured to be swivel connected to a second one of a sixth connection means (137.2) of the first base connecting railing (130).

8. Modular work platform (100) according to any of the previous claims, wherein each of the first base connecting railing (130) and the second base connecting railing (140) is provided with two railing posts (131, 132, 141, 142) and a handrail (133, 143).

9. Modular work platform (100) according to claim 8, wherein the handrails (133, 143) are formed integrally with their respective railing posts (131, 132, 141, 142).

10. Modular work platform (100) according to claim 8 or 9, wherein respective ends of the railing posts (131, 132, 141, 142) re of the first base connecting railing (130) and the second base connecting railing (140) serve as the fifth connection means (136.1, 136.2) and the eighth connection means (146.1, 146.2), whereby each of the respective ends of the railing posts (131, 132, 141, 142) comprises a through hole for a pin (101.1).

11. Modular work platform (100) according to claim 10,
wherein the first connection means (114.1, 114.2) and the third connection means (124.1, 124.2) are sleeves configured in size and/or shape corresponding to the ends of the railing posts (131, 132, 141, 142) of the first base connecting railing (130) and the second base connecting railing (140), whereby each of the sleeves comprises a through hole for the pin (101.1).

12. Modular work platform (100) according to claim 11,
wherein the ends of the railing posts (131, 132, 141, 142) of the first base connecting railing (130) and the second base connecting railing (140) are received by the first connection means (114.1, 114.2) and the third connection means (124.1, 124.2) in the assembled state of the modular work platform (100), whereby the railing posts (131, 132, 141, 142) and the sleeves are locked by means of locking elements (101), in particular double wire lock pins.

13. Modular work platform (100) according to any of the previous claims, wherein the first base connecting railing (130) and the second base connecting railing (140) are curved.

14. Modular work platform (100) according to any of the previous claims, wherein a first wall (113) is attached to the first base module (110), a second wall (123) is attached to the second base module (120), a third wall (135) is attached to the first base connecting railing (130) and a fourth wall (145) is attached to the second base connecting railing (140), so that the first wall (113), the second wall (122), the third wall (135) and the fourth wall (145) together enclose the first accessible area (111), the second accessible area (121) and the platform opening (102).

15. System (30) comprising a modular work platform (100) according to any of the previous claims and a fixture (20) for the tuned mass damper (10) in the wind turbine, whereby the modular work platform (100) is connected to the fixture (20) .

## Patentansprüche

1. Modulare Arbeitsplattform (100), umfassend mehrere Module (110, 120, 130, 140, 150, 160, 170, 180, 190, 200) zur Montage um einen geregelten Schwingungsdämpfer (10) in einer Windkraftanlage, wobei die mehreren Module (110, 120, 130, 140, 150, 160, 170, 180, 190, 200) Folgende sind
(a) eine erste Basisplattform (110), die einen ersten zugänglichen Bereich (111) zum Vorsehen eines Arbeitsbereichs für einen ersten Arbeiter aufweist, wobei die erste Basisplattform (110) mindestens eine erste Verbindungseinrichtung (114.1, 114.2) aufweist,
(b) eine zweite Basisplattform (120), die einen zweiten zugänglichen Bereich (121) zum Vorsehen eines Arbeitsbereichs für einen zweiten Arbeiter aufweist, wobei die zweite Basisplattform (120) mindestens eine dritte Verbindungseinrichtung (124.1, 124.2) aufweist,
(c) ein erstes Basisverbindungsgeländer (130) zum Verbinden der ersten Basisplattform (110) mit der zweiten Basisplattform (120), wobei das erste Basisverbindungsgeländer (130) zwei fünfte Verbindungseinrichtungen (136.1, 136.2) aufweist, wobei eine der zwei fünften Verbindungseinrichtungen (136.1) dazu ausgelegt ist, mit der mindestens einen ersten Verbindungseinrichtung (114.1) verbunden zu sein, und eine andere der zwei fünften Verbindungseinrichtungen (136.2) dazu ausgelegt ist, mit der mindestens einen dritten Verbindungseinrichtung (124.1) verbunden zu sein, und
(d) ein zweites Basisverbindungsgeländer (140) zum Verbinden der ersten Basisplattform (110) mit der zweiten Basisplattform (120), wobei das zweite Basisverbindungsgeländer (140) zwei achte Verbindungseinrichtungen (146.1, 146.2) aufweist, wobei eine der zwei achten Verbindungseinrichtungen (146.1) dazu ausgelegt ist, mit der mindestens einen ersten Verbindungseinrichtung (114.2) verbunden zu sein, und eine andere der zwei achten Verbindungseinrichtungen (146.2) dazu ausgelegt ist, mit der mindestens einen dritten Verbindungseinrichtung (124.2) verbunden zu sein,
wobei im montierten Zustand der modularen Arbeitsplattform (100), in dem die fünfte Verbindungseinrichtung (136.1, 136.2) und die achte Verbindungseinrichtung (146.1, 146.2) jeweils mit der ersten Verbindungseinrichtung (114.1, 114.2) und der dritten Verbindungseinrichtung (124.1, 124.2) verbunden sind, die modulare Arbeitsplattform (100) eine Plattformöffnung (102) für den geregelten Schwingungsdämpfer (10) umfasst, wobei die Plattformöffnung (102) zwischen der ersten Basisplattform (110), der zweiten Basisplattform (120), dem ersten Basisverbindungsgeländer (130) und dem zweiten Basisverbindungsgeländer (140) ausgebildet ist.

2. Modulare Arbeitsplattform (100) nach Anspruch 1, wobei die mindestens eine erste Verbindungseinrichtung (114.1, 114.2) zwei erste Verbindungseinrichtungen (114.1, 114.2) sind und die mindestens eine dritte Verbindungseinrichtung (124.1, 124.2) zwei dritte Verbindungseinrichtungen (124.1, 124.2) sind, wobei eine der fünften Verbindungseinrichtungen (136.1) dazu ausgelegt ist, mit einer der zwei ersten Verbindungseinrichtungen (114.1) verbunden zu sein, und die andere der fünften Verbindungseinrichtungen (136.2) dazu ausgelegt ist, mit einer der zwei dritten Verbindungseinrichtungen (124.1) verbunden zu sein, und wobei eine der achten Verbindungseinrichtungen (146.1) dazu ausgelegt ist, mit der anderen der zwei ersten Verbindungseinrichtungen (114.2) verbunden zu sein, und die andere der achten Verbindungseinrichtungen (146.2) dazu ausgelegt ist, mit der anderen der zwei dritten Verbindungseinrichtungen (124.2) verbunden zu sein.

3. Modulare Arbeitsplattform (100) nach Anspruch 1 oder 2, wobei die erste Basisplattform (110) und die zweite Basisplattform (120) im montierten Zustand einander entgegengesetzt angeordnet sind.

4. Modulare Arbeitsplattform (100) nach einem der vorstehenden Ansprüche, wobei die modulare Arbeitsplattform (100) als weitere der mehreren Module (110, 120, 130, 140, 150, 160, 170, 180, 190, 200) Folgende umfasst
(a) ein erstes Basisgeländer (150), das mindestens eine elfte Verbindungseinrichtung (155.1, 155.2) aufweist, die dazu ausgelegt ist, mit mindestens einer zweiten Verbindungseinrichtung (115.1, 115.2) der ersten Basisplattform (110) verbunden zu sein, und
(b) ein zweites Basisgeländer (160), das mindestens eine vierzehnte Verbindungseinrichtung (165.1, 165.2) aufweist, die dazu ausgelegt ist, mit mindestens einer vierten Verbindungseinrichtung (125.1, 125.2) der zweiten Basisplattform (120) verbunden zu sein.

5. Modulare Arbeitsplattform (100) nach Anspruch 4, wobei die modulare Arbeitsplattform (100) als weitere der mehreren Module (110, 120, 130, 140, 150, 160, 170, 180, 190, 200) Folgende umfasst
(a) ein erstes Geländerverbindungsgeländer (170), das zwei siebzehnte Verbindungseinrichtungen (171.1, 171.2) aufweist, wobei eine der zwei siebzehnten Verbindungseinrichtungen (171.1) dazu ausgelegt ist, mit einer zwölften Verbindungseinrichtung (156) des ersten Basisgeländers (150) verbunden zu sein, und die andere der zwei siebzehnten Verbindungseinrichtungen (171.2) dazu ausgelegt ist, mit einer von zwei neunten Verbindungseinrichtungen (147.1) des zweiten Basisverbindungsgeländers (140) verbunden zu sein, und
(b) ein zweites Geländerverbindungsgeländer (180), das zwei neunzehnte Verbindungseinrichtungen (181.1, 181.2) aufweist, wobei eine der zwei neunzehnten Verbindungseinrichtungen (181.1) dazu ausgelegt ist, mit einer fünfzehnten Verbindungseinrichtung (166) des zweiten Basisgeländers (160) verbunden zu sein, und die andere der zwei neunzehnten Verbindungseinrichtungen (181.2) dazu ausgelegt ist, mit der anderen der zwei neunten Verbindungseinrichtungen (147.2) des zweiten Basisverbindungsgeländers (140) verbunden zu sein, wobei im montierten Zustand der modularen Arbeitsplattform (100) das erste Geländerverbindungsgeländer (170) das erste Basisgeländer (150) mit dem zweiten Basisverbindungsgeländer (140) verbindet und das zweite Geländerverbindungsgeländer (180) das zweite Basisgeländer (160) mit dem zweiten Basisverbindungsgeländer (140) verbindet.

6. Modulare Arbeitsplattform (100) nach Anspruch 4 oder 5, wobei die modulare Arbeitsplattform (100) als weitere der mehreren Module (110, 120, 130, 140, 150, 160, 170, 180, 190, 200) Folgende umfasst
(c) einen fünften Querträger (172), der zwei achtzehnte Verbindungseinrichtungen (173.1, 173.2) aufweist, wobei eine der zwei achtzehnten Verbindungseinrichtungen (173.1) dazu ausgelegt ist, mit einer dreizehnten Verbindungseinrichtung (157) des ersten Basisgeländers (150) verbunden zu sein, und die andere der zwei achtzehnten Verbindungseinrichtungen (173.2) dazu ausgelegt ist, mit einer von zwei zehnten Verbindungseinrichtungen (148.1) des zweiten Basisverbindungsgeländers (140) verbunden zu sein, und
(d) einen sechsten Querträger (182), der zwei zwanzigste Verbindungseinrichtungen (183.1, 183.2) aufweist, wobei eine der zwei zwanzigsten Verbindungseinrichtungen (183.1) dazu ausgelegt ist, mit einer sechzehnten Verbindungseinrichtung (167) des zweiten Basisgeländers (160) verbunden zu sein, und die andere der zwei zwanzigsten Verbindungseinrichtungen (183.2) dazu ausgelegt ist, mit der anderen der zwei zehnten Verbindungseinrichtungen (148.2) des zweiten Basisverbindungsgeländers (140) verbunden zu sein, wobei im montierten Zustand der modularen Arbeitsplattform (100) der fünfte Querträger (172) das erste Basisgeländer (150) mit dem zweiten Basisverbindungsgeländer (140) verbindet und der sechste Querträger (182) das zweite Basisgeländer (160) mit dem zweiten Basisverbindungsgeländer (140) verbindet.

7. Modulare Arbeitsplattform (100) nach einem der vorstehenden Ansprüche, wobei die modulare Arbeitsplattform (100) als weitere der mehreren Module (110, 120, 130, 140, 150, 160, 170, 180, 190, 200) Folgende umfasst
(c) eine erste Schwenktür (190), die eine einundzwanzigste Verbindungseinrichtung (191) aufweist, die dazu ausgelegt ist, mit einer ersten einer sechsten Verbindungseinrichtung (137.1) des ersten Basisverbindungsgeländers (130) verschwenkbar verbunden zu sein, und/oder
(d) eine zweite Schwenktür (200), die eine dreiundzwanzigste Verbindungseinrichtung (201) aufweist, die dazu ausgelegt ist, mit einer zweiten einer sechsten Verbindungseinrichtung (137.2) des ersten Basisverbindungsgeländers (130) verschwenkbar verbunden zu sein.

8. Modulare Arbeitsplattform (100) nach einem der vorstehenden Ansprüche, wobei jedes des ersten Basisverbindungsgeländers (130) und den zweiten Basisverbindungsgeländers (140) mit zwei Geländerpfosten (131, 132, 141, 142) und einem Handlauf (133, 143) versehen ist.

9. Modulare Arbeitsplattform (100) nach Anspruch 8, wobei die Handläufe (133, 143) in deren jeweilige Geländerpfosten (131, 132, 141, 142) integriert ausgebildet sind.

10. Modulare Arbeitsplattform (100) nach Anspruch 8 oder 9, wobei die jeweiligen Enden der Geländerpfosten (131, 132, 141, 142) des ersten Basisverbindungsgeländers (130) und des zweiten Basisverbindungsgeländers (140) als die fünften Verbindungseinrichtungen (136.1, 136.2) und die achten Verbindungseinrichtungen (146.1, 146.2) dienen, wobei jedes der jeweiligen Enden der Geländerpfosten (131, 132, 141, 142) eine Durchgangsbohrung für einen Stift (101.1) umfasst.

11. Modulare Arbeitsplattform (100) nach Anspruch 10, wobei die erste Verbindungseinrichtung (114.1, 114.2) und die dritte Verbindungseinrichtung (124.1, 124.2) Hülsen sind, die in ihrer Größe und/oder Form zu den Enden der Geländerpfosten (131, 132, 141, 142) des ersten Basisverbindungsgeländers (130) und des zweiten Basisverbindungsgeländers (140) passend ausgelegt sind, wobei jede der Hülsen eine Durchgangsbohrung für den Stift (101.1) umfasst.

12. Modulare Arbeitsplattform (100) nach Anspruch 11, wobei die Enden der Geländerpfosten (131, 132, 141, 142) des ersten Basisverbindungsgeländers (130) und des zweiten Basisverbindungsgeländers (140) von der ersten Verbindungseinrichtung (114.1, 114.2) und der dritten Verbindungseinrichtung (124.1, 124.2) im montierten Zustand der modularen Arbeitsplattform (100) aufgenommen werden, wobei die Geländerpfosten (131, 132, 141, 142) und die Hülsen mittels Verriegelungselementen (101), insbesondere Doppeldrahtsicherungsstiften, verriegelt sind.

13. Modulare Arbeitsplattform (100) nach einem der vorstehenden Ansprüche, wobei das erste Basisverbindungsgeländer (130) und das zweite Basisverbindungsgeländer (140) gekrümmt sind.

14. Modulare Arbeitsplattform (100) nach einem der vorstehenden Ansprüche, wobei eine erste Wand (113) am ersten Basismodul (110) befestigt ist, eine zweite Wand (123) am zweiten Basismodul (120) befestigt ist, eine dritte Wand (135) am ersten Basisverbindungsgeländer (130) befestigt ist und eine vierte Wand (145) am zweiten Basisverbindungsgeländer (140) befestigt ist, sodass die erste Wand (113), die zweite Wand (122), die dritte Wand (135) und die vierte Wand (145) zusammen den ersten zugänglichen Bereich (111), den zweiten zugänglichen Bereich (121) und die Plattformöffnung (102) umschließen.

15. System (30), umfassend eine modulare Arbeitsplattform (100) nach einem der vorstehenden Ansprüche und eine Halterung (20) für den geregelten Schwingungsdämpfer (10) in der Windkraftanlage, wobei die modulare Arbeitsplattform (100) mit der Halterung (20) verbunden ist.

## Revendications

1. Plate-forme de travail modulaire (100) comprenant de multiples modules (110, 120, 130, 140, 150, 160, 170, 180, 190, 200) destinés à être assemblés autour d'un amortisseur à masse accordée (10) dans une éolienne, dans laquelle les multiples modules (110, 120, 130, 140, 150, 160, 170, 180, 190, 200) sont
(a) une première plate-forme de base (110) qui comporte une première zone accessible (111) pour constituer un espace de travail pour un premier agent, la première plate-forme de base (110) comportant au moins un premier moyen de connexion (114.1, 114.2),
(b) une seconde plate-forme de base (120) qui comporte une seconde zone accessible (121) pour constituer un espace de travail pour un second agent, la seconde plate-forme de base (120) comportant au moins un troisième moyen de connexion (124.1, 124.2),
(c) un premier garde-corps de connexion de base (130) pour connecter la première plate-forme de base (110) avec la seconde plate-forme de base (120), le premier garde-corps de connexion de base (130) comportant deux cinquièmes moyens de connexion (136.1, 136.2), dans laquelle l'un des deux cinquièmes moyens de connexion (136.1) est configuré pour être connecté à l'au moins un premier moyen de connexion (114.1) et l'autre des deux cinquièmes moyens de connexion (136.2) est configuré pour être connecté à l'au moins un troisième moyen de connexion (124.1), et
(d) un second garde-corps de connexion de base (140) pour connecter la première plate-forme de base (110) avec la seconde plate-forme de base (120), le second garde-corps de connexion de base (140) comportant deux huitièmes moyens de connexion (146.1, 146.2), dans laquelle l'un des deux huitièmes moyens de connexion (146.1) est configuré pour être connecté à l'au moins un premier moyen de connexion (114.2) et l'autre des deux huitièmes moyens de connexion (146.2) est configuré pour être connecté à l'au moins un troisième moyen de connexion (124.2),
dans laquelle, dans un état assemblé de la plate-forme de travail modulaire (100), dans laquelle les cinquièmes moyens de connexion (136.1, 136.2) et les huitièmes moyens de connexion (146.1, 146.2) sont respectivement connectés au premier moyen de connexion (114.1, 114.2) et au troisième moyen de connexion (124.1, 124.2), la plate-forme de travail modulaire (100) comprend une ouverture de plate-forme (102) pour l'amortisseur à masse accordée (10), dans laquelle l'ouverture de plate-forme (102) est formée entre la première plate-forme de base (110), la seconde plate-forme de base (120), le premier garde-corps de connexion de base (130) et le second garde-corps de connexion de base (140).

2. Plate-forme de travail modulaire (100) selon la revendication 1, dans laquelle l'au moins un premier moyen de connexion (114.1, 114.2) est constitué par deux premiers moyens de connexion (114.1, 114.2) et l'au moins un troisième moyen de connexion (124.1, 124.2) est constitué par deux troisièmes moyens de connexion (124.1, 124.2), dans laquelle l'un des cinquièmes moyens de connexion (136.1) est configuré pour être connecté à l'un des deux premiers moyens de connexion (114.1) et l'autre des cinquièmes moyens de connexion (136.2) est configuré pour être connecté à l'un des deux troisièmes moyens de connexion (124.1), et dans laquelle l'un des huitièmes moyens de connexion (146.1) est configuré pour être connecté à l'autre des deux premiers moyens de connexion (114.2) et l'autre des huitièmes moyens de connexion (146.2) est configuré pour être connecté à l'autre des deux troisièmes moyens de connexion (124.2).

3. Plate-forme de travail modulaire (100) selon la revendication 1 ou 2, dans laquelle la première plate-forme de base (110) et la seconde plate-forme de base (120) sont localisées à l'opposé l'une de l'autre dans l'état assemblé.

4. Plate-forme de travail modulaire (100) selon l'une quelconque des revendications précédentes, dans laquelle la plate-forme de travail modulaire (100) comprend en tant qu'autres des multiples modules (110, 120, 130, 140, 150, 160, 170, 180, 190, 200)
(a) un premier garde-corps de base (150) qui comporte au moins un onzième moyen de connexion (155.1, 155.2) qui est configuré pour être connecté à au moins un deuxième moyen de connexion (115.1, 115.2) de la première plate-forme de base (110), et
(b) un second garde-corps de base (160) qui comporte au moins un quatorzième moyen de connexion (165.1, 165.2) qui est configuré pour être connecté à au moins un quatrième moyen de connexion (125.1, 125.2) de la seconde plate-forme de base (120).

5. Plate-forme de travail modulaire (100) selon la revendication 4, dans laquelle la plate-forme de travail modulaire (100) comprend en tant qu'autres des multiples modules (110, 120, 130, 140, 150, 160, 170, 180, 190, 200)
(a) un premier garde-corps de connexion de garde-corps (170) qui comporte deux dix-septièmes moyens de connexion (171.1, 171.2), dans laquelle l'un des deux dix-septièmes moyens de connexion (171.1) est configuré pour être connecté à un douzième moyen de connexion (156) du premier garde-corps de base (150) et l'autre des deux dix-septièmes moyens de connexion (171.2) est configuré pour être connecté à l'un de deux neuvièmes moyens de connexion (147.1) du second garde-corps de connexion de base (140), et
(b) un second garde-corps de connexion de garde-corps (180) qui comporte deux dix-neuvièmes moyens de connexion (181.1, 181.2), dans laquelle l'un des deux dix-neuvièmes moyens de connexion (181.1) est configuré pour être connecté à un quinzième moyen de connexion (166) du second garde-corps de base (160) et l'autre des deux dix-neuvièmes moyens de connexion (181.2) est configuré pour être connecté à l'autre des deux neuvièmes moyens de connexion (147.2) du second garde-corps de connexion de base (140),
dans laquelle, dans l'état assemblé de la plate-forme de travail modulaire (100), le premier garde-corps de connexion de garde-corps (170) connecte le premier garde-corps de base (150) avec le second garde-corps de connexion de base (140) et le second garde-corps de connexion de garde-corps (180) connecte le second garde-corps de base (160) avec le second garde-corps de connexion de base (140).

6. Plate-forme de travail modulaire (100) selon la revendication 4 ou 5, dans laquelle la plate-forme de travail modulaire (100) comprend en tant qu'autres des multiples modules (110, 120, 130, 140, 150, 160, 170, 180, 190, 200)
(c) un cinquième élément transversal (172) qui comporte deux dix-huitièmes moyens de connexion (173.1, 173.2), dans laquelle l'un des deux dix-huitièmes moyens de connexion (173.1) est configuré pour être connecté à un treizième moyen de connexion (157) du premier garde-corps de base (150) et l'autre des deux dix-huitièmes moyens de connexion (173.2) est configuré pour être connecté à l'un de deux dixièmes moyens de connexion (148.1) du second garde-corps de connexion de base (140), et
(d) un sixième élément transversal (182) qui comporte deux vingtièmes moyens de connexion (183.1, 183.2), dans laquelle l'un des deux vingtièmes moyens de connexion (183.1) est configuré pour être connecté à un seizième moyen de connexion (167) du second garde-corps de base (160) et l'autre des deux vingtièmes moyens de connexion (183.2) est configuré pour être connecté à l'autre des deux dixièmes moyens de connexion (148.2) du second garde-corps de connexion de base (140),
dans laquelle, dans l'état assemblé de la plate-forme de travail modulaire (100), le cinquième élément transversal (172) connecte le premier garde-corps de base (150) avec le second garde-corps de connexion de base (140) et le sixième élément transversal (182) connecte le second garde-corps de base (160) avec le second garde-corps de connexion de base (140).

7. Plate-forme de travail modulaire (100) selon l'une quelconque des revendications précédentes, dans laquelle la plate-forme de travail modulaire (100) comprend en tant qu'autres des multiples modules (110, 120, 130, 140, 150, 160, 170, 180, 190, 200)
(c) une première porte pivotante (190) qui comporte un vingt-et-unième moyen de connexion (191) qui est configuré pour être connecté par pivotement à un premier de sixièmes moyens de connexion (137.1) du premier garde-corps de connexion de base (130), et/ou
(d) une seconde porte pivotante (200) qui comporte un vingt-troisième moyen de connexion (201) qui est configuré pour être connecté par pivotement à un second des sixièmes moyens de connexion (137.2) du premier garde-corps de connexion de base (130) .

8. Plate-forme de travail modulaire (100) selon l'une quelconque des revendications précédentes, dans laquelle chacun du premier garde-corps de connexion de base (130) et du second garde-corps de connexion de base (140) est muni de deux poteaux de garde-corps (131, 132, 141, 142) et d'une main courante (133, 143) .

9. Plate-forme de travail modulaire (100) selon la revendication 8, dans laquelle les mains courantes (133, 143) sont formées d'un seul tenant avec leurs poteaux de garde-corps respectifs (131, 132, 141, 142) .

10. Plate-forme de travail modulaire (100) selon la revendication 8 ou 9, dans laquelle des extrémités respectives des poteaux de garde-corps (131, 132, 141, 142) du premier garde-corps de connexion de base (130) et du second garde-corps de connexion de base (140) jouent le rôle des cinquièmes moyens de connexion (136.1, 136.2) et des huitièmes moyens de connexion (146.1, 146.2), dans laquelle chacune des extrémités respectives des poteaux de garde-corps (131, 132, 141, 142) comprend un trou traversant pour une broche (101.1).

11. Plate-forme de travail modulaire (100) selon la revendication 10, dans laquelle les premiers moyens de connexion (114.1, 114.2) et les troisièmes moyens de connexion (124.1, 124.2) sont des manchons qui sont configurés en termes de dimension et/ou de forme en correspondance avec les extrémités des poteaux de garde-corps (131, 132, 141, 142) du premier garde-corps de connexion de base (130) et du second garde-corps de connexion de base (140), dans laquelle chacun des manchons comprend un trou traversant pour la broche (101.1).

12. Plate-forme de travail modulaire (100) selon la revendication 11, dans laquelle les extrémités des poteaux de garde-corps (131, 132, 141, 142) du premier garde-corps de connexion de base (130) et du second garde-corps de connexion de base (140) sont reçues par les premiers moyens de connexion (114.1, 114.2) et par les troisièmes moyens de connexion (124.1, 124.2) dans l'état assemblé de la plate-forme de travail modulaire (100), dans laquelle les poteaux de garde-corps (131, 132, 141, 142) et les manchons sont bloqués au moyen d'éléments de blocage (101), en particulier au moyen de broches de blocage à double fil.

13. Plate-forme de travail modulaire (100) selon l'une quelconque des revendications précédentes, dans laquelle le premier garde-corps de connexion de base (130) et le second garde-corps de connexion de base (140) sont incurvés.

14. Plate-forme de travail modulaire (100) selon l'une quelconque des revendications précédentes, dans laquelle une première paroi (113) est liée au premier module de base (110), une deuxième paroi (123) est liée au second module de base (120), une troisième paroi (135) est liée au premier garde-corps de connexion de base (130) et une quatrième paroi (145) est liée au second garde-corps de connexion de base (140) de telle sorte que la première paroi (113), la deuxième paroi (122), la troisième paroi (135) et la quatrième paroi (145) renferment en association la première zone accessible (111), la seconde zone accessible (121) et l'ouverture de plate-forme (102).

15. Système (30) comprenant une plate-forme de travail modulaire (100) selon l'une quelconque des revendications précédentes et un accessoire (20) pour l'amortisseur à masse accordée (10) dans l'éolienne, dans lequel la plate-forme de travail modulaire (100) est connectée à l'accessoire (20).
